# EUROPEAN PATENT SPECIFICATION

(11) **EP 4 417 860 B1**
(45) Date of publication and mention of the grant of the patent: **09.04.2025**
(21) Application number: 23156855.1
(22) Date of filing: 15.02.2023
(51) Int. Cl.: F17C 3/00, F17C 7/02

(54) **SYSTEM AND METHOD FOR REFRIGERATION OF CONTENTS OF AN LCO2 INTERMEDIATE STORAGE TANK AT A CO2 RECEIVING TERMINAL**
SYSTEM UND VERFAHREN ZUR KÜHLUNG DES INHALTS EINES LCO2-ZWISCHENLAGERTANKS AN EINEM CO2-EMPFANGS TERMINAL
SYSTÈME ET PROCÉDÉ DE RÉFRIGÉRATION DU CONTENU D'UN RÉSERVOIR DE STOCKAGE INTERMÉDIAIRE LCO2 AU NIVEAU D'UN TERMINAL DE RÉCEPTION DE CO2

(43) Date of publication of application: 21.08.2024
(73) Proprietor: Horisont Energi AS, 4313 Sandnes (NO)
(72) Inventor: FELBAB, Nikola, 4313 SANDNES (NO)
(74) Representative: Brann AB

(56) References cited:
- JP-B2- H0 633 873
- KR-A- 20110 074 056
- US-A1- 2008 256 959
- US-A1- 2019 024 847

## Description

### FIELD OF THE INVENTION

The present invention generally relates to Carbon Capture and Storage (CCS) technology, and more particularly to a system and method for refrigeration of the contents of an intermediate liquid CO₂ (LCO₂) storage tank at a CO₂ receiving terminal during offloading of LCO₂ into the storage tank. The invention uses vaporisation of LCO₂ for vapour return to ship to assist in refrigerating a fluid stream being withdrawn from storage tank, which fluid stream, after refrigeration thereof, is returned to the storage tank.

### BACKGROUND ART

In a CO₂ terminal for Carbon Capture and Storage (CCS), intermediate storage is provided for the liquefied CO₂ (LCO₂) prior to injection into a reservoir for long-term storage. Captured and liquefied carbon dioxide can be transported in the liquid phase (LCO₂) from various locations and customers by ship to CO₂ receiving terminals. The purpose of the buffer storage is to allow for continuous injection to the long-term storage reservoir despite intermittent LCO₂ cargo transfer from ship.

Document KR 2011 0074056 A discloses an underground storage method of liquid carbon dioxide.

During LCO₂ cargo transfer between ship and onshore intermediate storage, pressure maintenance in both sets of tanks, i.e. of the carrier ship and of the intermediate storage of the CO₂ receiving terminal, respectively, may be desirable. For example, displaced vapour in the onshore intermediate storage tank could be returned to the CO₂ carrier ship via a vapour return connection.

Handling of liquefied gases, e.g. LCO₂, below ambient temperature often requires mechanical refrigeration to maintain or lower the pressure in an intermediate storage, without venting the liquefied gas to atmosphere or another location. However, refrigeration requires power input.

It would be desirable to be able to reduce the power input requirements for the refrigeration required in a CO₂ terminal to control the storage pressure.

Accordingly, it is an object of the present invention to provide a system and a method enabling reducing the power input requirements for refrigeration in a CO₂ terminal.

### SUMMARY OF THE INVENTION

The present invention uses cold CO₂ present in the CO₂ terminal outside of the intermediate storage as a heat sink to aid the refrigeration. More particularly, the invention uses LCO₂ that is vaporised at the terminal to be returned to a ship for ship pressure maintenance during cargo transfer from the ship to the intermediate storage. This cold LCO₂ needs to be heated in order to be vaporised, and can thus act as a heat sink to aid refrigeration.

Accordingly, in one aspect the invention relates to a system 110 configured to refrigerate LCO₂ contained in an intermediate LCO₂ storage tank 10 at a CO₂ receiving terminal, the system comprising: an intermediate LCO₂ storage tank **10**; a fluid withdrawal conduit **40** connected to the intermediate LCO₂ storage tank **10** configured to withdrawing fluid stream from the intermediate LCO₂ storage tank **10**; an LCO₂ cargo import conduit **5**, **6** connected to the intermediate LCO₂ storage tank **10** configured to receive an LCO₂ cargo import stream from a LCO₂ carrier ship **30**; a CO₂ vapour return conduit **8** configured to be connected to the LCO₂ carrier ship **30** and to return from the system **110** CO₂ vapour to the LCO₂ carrier ship **30**; a refrigeration unit **50; 51** connected to the fluid withdrawal conduit **40** configured to refrigerate the withdrawn fluid stream from the intermediate LCO₂ storage tank **10**; a fluid return conduit **42** connecting the refrigeration unit **50**; **51** with the intermediate LCO₂ storage tank **10** configured to convey a refrigerated and/or liquefied fluid stream from the refrigeration unit **50**; **51** to the intermediate LCO₂ storage tank **10**, an LCO₂ partial stream conduit **7** connected to the LCO₂ cargo import conduit **5**, **6** configured to withdrawing a partial stream of LCO₂ from the LCO₂ cargo import conduit **5**, **6**; a vaporiser/sub-ambient cooler **71** connected to the LCO₂ partial stream conduit **7** configured to receiving the partial stream of LCO₂, and to transfer, from a fluid heating stream being fed into the vaporiser/sub-ambient cooler, heat to the partial stream of LCO₂, thereby vaporising the partial stream of LCO₂, and exiting a stream of CO₂ into the CO₂ vapour return conduit **8**; a cooling conduit **75** connecting the refrigeration unit **50; 51** with the vaporiser/sub-ambient cooler **71**, configured to convey from the latter to the former the fluid heating stream; and, a cooling return conduit **73** connecting the refrigeration unit **50; 51** with the vaporiser/sub-ambient cooler **71**, configured to convey from the former to the latter a cooled fluid heating stream.

In another aspect, the invention relates to a method for refrigeration of the contents of an intermediate LCO₂ storage tank **10** at a CO₂ receiving terminal during offloading of LCO₂ into the storage tank, said method comprising the following steps: **A** receiving a main stream **5**, **6** of LCO₂ from an LCO₂ carrier ship **30** and directing the main stream to an intermediate LCO₂ storage tank **10**; **B** withdrawing an LCO₂ partial stream **7** from the main stream of LCO₂ in step **A**; **C** returning a CO₂ vapour stream **8** the carrier ship **30**; **D** withdrawing a fluid stream **40** from the intermediate LCO₂ storage tank **10**; **E** refrigerating the fluid stream from step **D**, thereby liquefying the fluid stream and/or cooling the fluid stream to a lower temperature; **F** returning the fluid stream **42** from step **E** into the storage tank **10**; **G** vaporising the LCO₂ partial stream **7** using a fluid heating stream **75** from a refrigeration unit **50**; **51**, wherein, in step **C**, the CO₂ vapour being returned to the LCO₂ carrier ship **30** comprises a stream of CO₂ vapour obtained from the vaporisation in step **G**, and, wherein, in step **G**, heat transfer to the LCO₂ partial stream **7** by the fluid heating stream **75** creates a cooled fluid heating stream **73**, which is sent back to the refrigeration unit **50**; **51** at a sub-ambient temperature by which the vaporisation in step **G** provides a sub-ambient heat sink to the refrigeration unit **50**; **51**.

In certain preferred embodiments of the system and method, only CO₂ vapour generated from the LCO₂ partial stream **7** withdrawn from the LCO₂ cargo import conduit **5**, **6** is returned to the ship. In said embodiments, the risk for potential return of CO₂ contaminated with contaminants contained in the onshore storage tank **10** received from previous cargoes from other ships **30** is eliminated. Accordingly, such embodiments eliminate the potential risk of cross-contamination from one cargo ship **30** to another **30**.

The present invention achieves the advantage of providing CO₂ vapour return to an off-loading LCO₂ carrier ship **30**, independent of the content in the onshore storage tanks, i.e. avoiding exposure of potential contaminants contained in the vapour space from previous off-loaded cargoes, such as from other LCO₂ carrier ships **30**.

The invention can reduce the power requirements for the refrigeration by about 50% compared to using an ambient heat sink alone.

Further embodiments and advantages of the invention will be apparent from the following detailed description and appended claims.

In the present disclosure, same reference numeral is used both to denote the conduit and the stream flowing therein. For example, reference numeral **7** is used to both denote the LCO₂ partial stream conduit, and also to denote the LCO₂ partial stream itself flowing in said conduit.

The term "long-term" as used herein denotes a storage intended to be permanent.

### BRIEF DESCRIPTION OF THE ATTACHED DRAWING

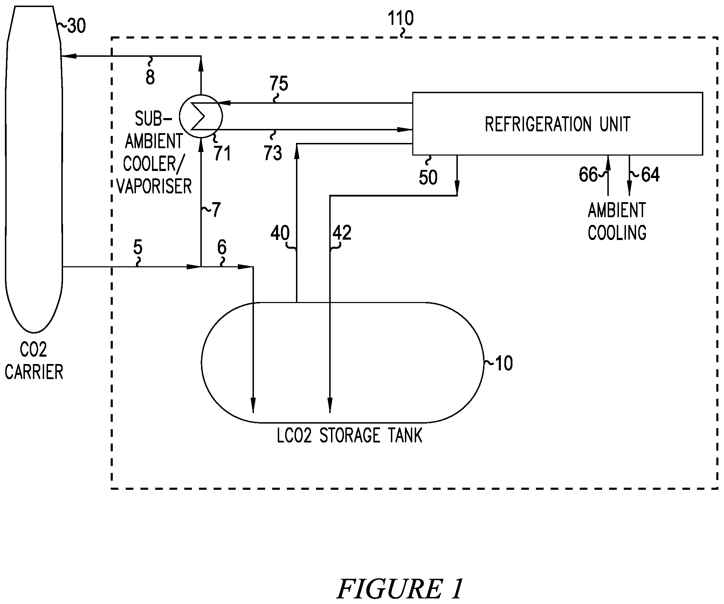

Figure 1 shows an embodiment of the inventive system **110** as indicated by the dashed line which can be implemented into an CO₂ receiving terminal. The inventive system **50** in its most generic embodiment does not include the ambient cooling **64**, **66**, which in a preferred embodiment can be attached to the refrigeration unit **50**. In a preferred embodiment, the vapour return stream in conduit **8** is exclusively obtained from the LCO₂ partial stream **7**.

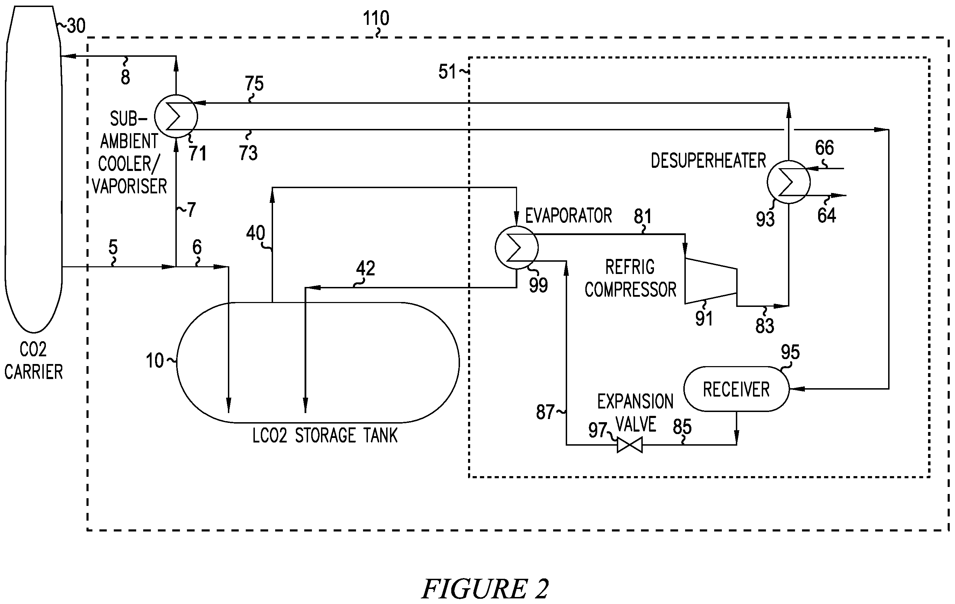

Figure 2 shows an embodiment of the inventive system **110** including an embodiment **51** of the refrigeration unit which is shown in more detail.

### DETAILED DESCRIPTION OF THE INVENTION

The present invention provides refrigeration of an intermediate LCO₂ storage tank **10** during cargo transfer to the storage tank from a carrier ship **30**. The system and method are preferably run so as to avoid vapour from another source than a stream withdrawn from the cargo transfer stream being returned to the carrier ship **30**. As shown in **Fig. 1****,** the partial LCO₂ stream that is vaporised to provide vapour return to the ship **30,** can be used as an additional, sub-ambient heat sink for the refrigeration.

By providing a sub-ambient heat sink for the refrigeration system, the temperature difference between the heat source (fluid **40** from the intermediate LCO₂ storage tank **10**) and the heat sink (partial LCO₂ stream **7** that is to be vaporised for vapour return to the ship **30**) is reduced compared to using only an ambient heat sink **64**, **66**, which inherently improves refrigeration efficiency.

The refrigeration unit could, in principle, use any sort of refrigeration, including mechanical, thermoelectric, or absorptive refrigeration, mechanical refrigeration being generally preferred due to the current state of the art. The invention provides a lower-temperature heat sink compared to the ambient, and thereby increases refrigeration efficiency.

The ambient fluid used for ambient cooling could be sea water, fresh water and/or air.

The invention can reduce the power requirements for the refrigeration by about 50% compared to using ambient heat sinks alone.

The flow rate of the LCO₂ partial stream **7** will be determined by the off-loading rate, and typically around 5% of the total flow will be required.

### LIST OF REFERENCE SIGNS USED

- 5, 6: LCO₂ cargo import conduit
- 7: LCO₂ partial stream conduit
- 8: CO₂ vapour return conduit
- 10: intermediate LCO₂ storage tank
- 30: LCO₂ carrier ship
- 40: fluid withdrawal conduit
- 42: fluid return conduit
- 50; 51: refrigeration unit
- 64: ambient cooling outlet
- 66: ambient cooling inlet
- 71: vaporiser/sub-ambient cooler
- 73: cooling return conduit
- 75: cooling conduit
- 85, 87, 81, 83: refrigerant medium conduit
- 73, 85, 87, 81, 83, 75: closed refrigerant loop
- 91: refrigerant compressor
- 93: desuperheater
- 95: refrigerant receiver
- 97: expansion valve
- 99: evaporator
- 110: system

## Claims

1. A system (110) configured to refrigerate LCO₂ contained in an intermediate LCO₂ storage tank (10) at a CO₂ receiving terminal, the system comprising:
- an intermediate LCO₂ storage tank (10);
- a fluid withdrawal conduit (40) connected to the intermediate LCO₂ storage tank (10) configured to withdrawing fluid stream from the intermediate LCO₂ storage tank (10);
- an LCO₂ cargo import conduit (5, 6) connected to the intermediate LCO₂ storage tank (10) configured to receive an LCO₂ cargo import stream from a LCO₂ carrier ship (30);
- a CO₂ vapour return conduit (8) configured to be connected to the LCO₂ carrier ship (30) and to return from the system (110) CO₂ vapour to the LCO₂ carrier ship (30);
- a refrigeration unit (50; 51) connected to the fluid withdrawal conduit (40) configured to refrigerate the withdrawn fluid stream from the intermediate LCO₂ storage tank (10);
- a fluid return conduit (42) connecting the refrigeration unit (50; 51) with the intermediate LCO₂ storage tank (10) configured to convey a refrigerated and/or liquefied fluid stream from the refrigeration unit (50; 51) to the intermediate LCO₂ storage tank (10),
- an LCO₂ partial stream conduit (7) connected to the LCO₂ cargo import conduit (5, 6) configured to withdrawing a partial stream of LCO₂ from the LCO₂ cargo import conduit (5, 6);
- a vaporiser/sub-ambient cooler (71) connected to the LCO₂ partial stream conduit (7) configured to receiving the partial stream of LCO₂, and to transfer, from a fluid heating stream being fed into the vaporiser/sub-ambient cooler, heat to the partial stream of LCO₂, thereby vaporising the partial stream of LCO₂, and exiting a stream of CO₂ into the CO₂ vapour return conduit (8);
- a cooling conduit (75) connecting the refrigeration unit (50; 51) with the vaporiser/sub-ambient cooler (71), configured to convey from the latter to the former the fluid heating stream; and,
- a cooling return conduit (73) connecting the refrigeration unit (50; 51) with the vaporiser/sub-ambient cooler (71), configured to convey from the former to the latter a cooled fluid heating stream.

2. The system (110) of claim 1, wherein the CO₂ vapour return conduit (8) is configured to receive only CO₂ vapour resulting from vaporisation of a partial stream withdrawn from the LCO₂ cargo import conduit (5, 6).

3. A method for refrigeration of the contents of an intermediate LCO₂ storage tank (10) at a CO₂ receiving terminal during offloading of LCO₂ into the storage tank, said method comprising the following steps:
A) receiving a main stream (5, 6) of LCO₂ from an LCO₂ carrier ship (30) and directing the main stream to an intermediate LCO₂ storage tank (10);
B) withdrawing an LCO₂ partial stream (7) from the main stream of LCO₂ in step A;
C) returning a CO₂ vapour stream (8) the carrier ship (30);
D) withdrawing a fluid stream (40) from the intermediate LCO₂ storage tank (10);
E) refrigerating the fluid stream from step D, thereby liquefying the fluid stream and/or cooling the fluid stream to a lower temperature;
F) returning the fluid stream (42) from step E into the storage tank (10);
G) vaporising the LCO₂ partial stream (7), using a fluid heating stream (75) from a refrigeration unit (50; 51),
wherein, in step C, the CO₂ vapour being returned to the LCO₂ carrier ship (30) comprises a stream of CO₂ vapour obtained from the vaporisation in step G, and, wherein, in step G, heat transfer to the LCO₂ partial stream (7) by the fluid heating stream (75) creates a cooled fluid heating stream (73), which is sent back to the refrigeration unit (50; 51) at a sub-ambient temperature by which the vaporisation in step G provides a sub-ambient heat sink to the refrigeration unit (50; 51).

4. The method for refrigeration of the contents of an intermediate LCO₂ storage tank (10) at a CO₂ receiving terminal during offloading of LCO₂ into the storage tank of claim 3, wherein the CO₂ vapour stream (8) being returned to the carrier ship (30) in step (C) is only CO₂ resulting from the vaporisation in step (G).

## Patentansprüche

1. System (110), das konfiguriert ist, LCO₂, das in einem LCO₂-Zwischenspeichertank (10) enthalten ist, an einem CO₂-Empfangsterminal zu kühlen, wobei das System aufweist:
- einen LCO₂-Zwischenspeichertank (10);
- eine Fluidentnahmeleitung (40), die mit dem LCO₂-Zwischenspeichertank (10) verbunden und konfiguriert ist, einen Fluidstrom aus dem LCO₂-Zwischenspeichertank (10) zu entnehmen;
- eine LCO₂-Frachtimportleitung (5, 6), die mit dem LCO₂-Zwischenspeichertank (10) verbunden und so konfiguriert ist, einen LCO₂-Frachtimportstrom von einem LCO₂-Tanker (30) aufzunehmen;
- eine CO₂-Dampfrückführleitung (8), die konfiguriert ist, mit dem LCO₂-Tanker (30) verbunden zu werden und CO₂-Dampf aus dem System (110) zum LCO₂-Tanker (30) zurückzuführen;
- eine Kühleinheit (50; 51), die mit der Fluidentnahmeleitung (40) verbunden und konfiguriert ist, den entnommenen Fluidstrom aus dem LCO₂-Zwischenspeichertank (10) zu kühlen;
- eine Fluidrückführleitung (42), die die Kühleinheit (50; 51) mit dem LCO₂-Zwischenspeichertank (10) verbindet und konfiguriert ist, einen gekühlten und/oder verflüssigten Fluidstrom von der Kühleinheit (50; 51) zum LCO₂-Zwischenspeichertank (10) zu befördern,
- eine LCO₂-Teilstromleitung (7), die mit der LCO₂-Frachtimportleitung (5, 6) verbunden ist und konfiguriert ist, einen Teilstrom von LCO₂ aus der LCO₂-Frachtimportleitung (5, 6) zu entnehmen;
- einen Verdampfer/Unterumgebungskühler (71), der mit der LCO₂-Teilstromleitung (7) verbunden ist und konfiguriert ist, den LCO₂-Teilstrom aufzunehmen und von einem in den Verdampfer/Unterumgebungskühler eingespeisten Fluidheizstrom Wärme an den LCO₂-Teilstrom zu übertragen, wodurch der LCO₂-Teilstrom verdampft wird, und einen CO₂-Strom in die CO₂-Dampfrückführleitung (8) austreten zu lassen;
- eine Kühlleitung (75), die die Kühleinheit (50; 51) mit dem Verdampfer/Unterumgebungskühler (71) verbindet und konfiguriert ist, den Fluidheizstrom von letzterem zu ersterem zu befördern; und
- eine Kühlrückführleitung (73), die die Kühleinheit (50; 51) mit dem Verdampfer/Unterumgebungskühler (71) verbindet und konfiguriert ist, einen gekühlten Fluidheizstrom von ersterem zu letzterem zu befördern.

2. System (110) nach Anspruch 1, wobei die CO₂-Dampfrückführleitung (8) konfiguriert ist, nur CO₂-Dampf aufzunehmen, der aus einer Verdampfung eines Teilstroms resultiert, der aus der LCO₂-Frachtimportleitung (5, 6) entnommen wird.

3. Verfahren zur Kühlung des Inhalts eines LCO₂-Zwischenspeichertanks (10) an einem CO₂-Empfangsterminal während eines Entladens von LCO₂ in den Speichertank, wobei das Verfahren die folgenden Schritte aufweist:
A) Aufnehmen eines Hauptstroms (5, 6) von LCO₂ von einem LCO₂-Tanker (30) und Leiten des Hauptstroms zu einem LCO₂-Zwischenspeichertank (10);
B) Entnehmen eines LCO₂-Teilstroms (7) aus dem LCO₂-Hauptstrom in Schritt A;
C) Rückführen eines CO₂-Dampfstroms (8) zum Tanker (30);
D) Entnehmen eines Fluidstroms (40) aus dem LCO₂-Zwischenspeichertank (10);
E) Kühlen des Fluidstroms aus Schritt D, wodurch der Fluidstrom verflüssigt und/oder der Fluidstrom auf eine niedrigere Temperatur gekühlt wird;
F) Rückführen des Fluidstroms (42) aus Schritt E in den Speichertank (10);
G) Verdampfen des LCO₂-Teilstroms (7) unter Verwendung eines Fluidheizstroms (75) von einer Kühleinheit (50; 51),
wobei in Schritt C der CO₂-Dampf, der zum LCO₂-Tanker (30) zurückgeführt wird, einen CO₂-Dampfstrom aufweist, der aus der Verdampfung in Schritt G erhalten wird, und wobei in Schritt G eine Wärmeübertragung auf den LCO₂-Teilstrom (7) durch den Fluidheizstrom (75) einen gekühlten Fluidheizstrom (73) erzeugt, der mit einer Temperatur unterhalb der Umgebungstemperatur zur Kühleinheit (50; 51) zurückgeführt wird, wodurch die Verdampfung in Schritt G eine Unterumgebungs-Wärmesenke für die Kühleinheit (50; 51) bereitstellt.

4. Verfahren zur Kühlung des Inhalts eines LCO₂-Zwischenspeichertanks (10) an einem CO₂-Empfangsterminal während eines Entladens von LCO₂ in den Speichertank nach Anspruch 3, wobei der CO₂-Dampfstrom (8), der in Schritt (C) zum Tanker (30) zurückgeführt wird, nur aus CO₂ besteht, das aus der Verdampfung in Schritt (G) resultiert.

## Revendications

1. Système (110) configuré pour réfrigérer du LCO₂ contenu dans un réservoir de stockage de LCO₂ intermédiaire (10) au niveau d'un terminal de réception de CO2, le système comprenant :
- un réservoir de stockage de LCO₂ intermédiaire (10) ;
- une conduite d'élimination de fluide (40) raccordée au réservoir de stockage de LCO₂ intermédiaire (10) configurée pour éliminer un courant de fluide du réservoir de stockage de LCO₂ intermédiaire (10) ;
- une conduite d'importation de cargaison de LCO₂ (5, 6) raccordée au réservoir de stockage de LCO₂ intermédiaire (10) configurée pour recevoir un courant d'importation de cargaison de LCO₂ à partir d'un navire de transport de LCO₂ (30) ;
- une conduite de retour de vapeur de CO₂ (8) configurée pour être raccordée au navire de transport de LCO₂ (30) et pour retourner à partir du système (110) une vapeur de CO₂ vers le navire de transport de LCO₂ (30) ;
- une unité de réfrigération (50 ; 51) raccordée à la conduite d'élimination de fluide (40) configurée pour réfrigérer le courant de fluide éliminé à partir du réservoir de stockage de LCO₂ intermédiaire (10) ;
- une conduite de retour de fluide (42) raccordant l'unité de réfrigération (50 ; 51) au réservoir de stockage de LCO₂ intermédiaire (10) configurée pour transporter un courant de fluide réfrigéré et/ou liquéfié à partir de l'unité de réfrigération (50 ; 51) jusqu'au réservoir de stockage de LCO₂ intermédiaire (10),
- une conduite de courant partiel de LCO₂ (7) raccordée à la conduite d'importation de cargaison de LCO₂ (5, 6) configurée pour éliminer un courant partiel de LCO₂ de la conduite d'importation de cargaison de LCO₂ (5, 6) ;
- un vaporisateur/refroidisseur sous-ambiant (71) raccordé à la conduite de courant partiel de LCO₂ (7) configuré pour recevoir le courant partiel de LCO₂, et pour transférer, à partir d'un courant de chauffage de fluide qui est introduit dans le vaporisateur/refroidisseur sous-ambiant, de la chaleur vers le courant partiel de LCO₂, vaporisant ainsi le courant partiel de LCO₂, et quittant un courant de CO₂ dans la conduite de retour de vapeur de CO₂ (8) ;
- une conduite de refroidissement (75) raccordant l'unité de réfrigération (50 ; 51) au vaporisateur/refroidisseur sous-ambiant (71), configurée pour transporter à partir de ce dernier jusqu'à la première le courant de chauffage de fluide ; et,
- une conduite de retour de refroidissement (73) raccordant l'unité de réfrigération (50 ; 51) au vaporisateur/refroidisseur sous-ambiant (71), configurée pour transporter à partir de ce dernier jusqu'à la première un courant de chauffage de fluide refroidi.

2. Système (110) selon la revendication 1, dans lequel la conduite de retour de vapeur de CO₂ (8) est configurée pour recevoir uniquement de la vapeur de CO₂ résultant de la vaporisation d'un courant partiel éliminé de la conduite d'importation de cargaison de LCO₂ (5, 6).

3. Procédé de réfrigération des contenus d'un réservoir de stockage de LCO₂ intermédiaire (10) au niveau d'un terminal de réception de CO₂ pendant le déchargement de LCO₂ dans le réservoir de stockage, ledit procédé comprenant les étapes suivantes :
A) la réception d'un courant principal (5, 6) de LCO₂ à partir d'un navire de transport de LCO₂ (30) et la direction du courant principal vers un réservoir de stockage de LCO₂ intermédiaire (10) ;
B) l'élimination d'un courant partiel de LCO₂ (7) à partir du courant principal de LCO₂ dans l'étape A ;
C) le retour d'un courant de vapeur de CO₂ (8) vers le navire de transport (30) ;
D) l'élimination d'un courant de fluide (40) du réservoir de stockage de LCO₂ intermédiaire (10) ;
E) la réfrigération du courant de fluide de l'étape D, liquéfiant par conséquent le courant de fluide et/ou refroidissant le courant de fluide à une température inférieure ;
F) le retour du courant de fluide (42) de l'étape E dans le réservoir de stockage (10) ;
G) la vaporisation du courant partiel de LCO₂ (7), au moyen d'un courant de chauffage de fluide (75) à partir d'une unité de réfrigération (50 ; 51),
dans lequel, dans l'étape C, la vapeur de CO₂ retournée vers le navire de transport de LCO₂ (30) comprend un courant de vapeur de CO₂ obtenu à partir de la vaporisation dans l'étape G, et, dans lequel, dans l'étape G, un transfert de chaleur vers le courant partiel de LCO₂ (7) par le courant de chauffage de fluide (75) crée un courant de chauffage de fluide refroidi (73), qui est renvoyé vers l'unité de réfrigération (50 ; 51) à une température sous-ambiante moyennant quoi la vaporisation dans l'étape G fournit un dissipateur thermique sous-ambiant à l'unité de réfrigération (50 ; 51).

4. Procédé pour la réfrigération des contenus d'un réservoir de stockage de LCO₂ intermédiaire (10) au niveau d'un terminal de réception de CO₂ pendant le déchargement de LCO₂ dans le réservoir de stockage selon la revendication 3, dans lequel le courant de vapeur de CO₂ (8) qui est retourné vers le navire de transport (30) dans l'étape (C) est seulement le CO₂ résultant de la vaporisation dans l'étape (G).
